Europäisches Patentamt

European Patent Office

Office européen des brevets

(11) Numéro de publication: **0 275 730 B1**

## FASCICULE DE BREVET EUROPEEN

(45) Date de publication de fascicule du brevet:
29.05.91

(51) Int. Cl.⁵: **F16F 9/348**, F16F 9/50, B62D 55/112

(21) Numéro de dépôt: 87402777.4

(22) Date de dépôt: 07.12.87

(54) Clapet d'étrétage à double sens et ouverture rapide pour élément de suspension hydropneumatique de véhicule, notamment véhicule lourd et dispositif d'amortissement et d'écrétage comprenant ce clapet.

(30) Priorité: 26.12.86 FR 8618207

(43) Date de publication de la demande:
27.07.88 Bulletin 88/30

(45) Mention de la délivrance du brevet:
29.05.91 Bulletin 91/22

(84) Etats contractants désignés:
CH DE ES GB IT LI

(56) Documents cités:
EP-A- 0 149 379
EP-A- 0 197 859
EP-A- 0 205 389
EP-A- 0 244 314
DE-U- 8 513 008

(73) Titulaire: **S.A.M.M.- Société d'Applications des Machines Motrices**
**Chemin de la Malmaison**
**F-91570 Bièvres(FR)**

(72) Inventeur: **Joseph, Philippe**
**Quartier Degay Loriol du Comtat**
**F-84200 Carpentras(FR)**
Inventeur: **Perrochat, Jean-Michel**
**102, avenue Verdier**
**F-92120 Montrouge(FR)**

(74) Mandataire: **Martin, Jean-Paul et al**
**c/o CABINET LAVOIX 2, Place d'Estienne d'Orves**
**F-75441 Paris Cedex 09(FR)**

Rank Xerox (UK) Business Services

## Description

La présente invention a pour objet un clapet d'écrétage à double sens et à ouverture rapide pour élément de suspension hydropneumatique de véhicule, notamment de véhicule lourd.

On connait des éléments de suspension hydropneumatique, en particulier oléopneumatique, pour véhicule, comprenant des cartouches disposées dans une chambre hydraulique, entre le piston et une chambre de gaz. Il est ainsi connu de réaliser des cartouches amortisseurs constituées d'un amortisseur proprement dit et d'un clapet d'écrétage, traversés par le fluide hydraulique alternativement dans les deux sens durant les déplacements du piston dans la chambre hydraulique, lorsque le véhicule roule sur terrain accidenté. Les pics et chutes de pression hydraulique très rapides déclenchés par le passage du véhicule sur des bosses et des creux sont normalement absorbés par le clapet d'écrétage associé à l'amortisseur, du moins jusqu'à une vitesse maximum déterminée.

Or, on constate que pour des vitesses verticales moyennes (5 à 10 m/s environ) du véhicule, c'est-à-dire lorsque l'élément de suspension fonctionne en compression, il se produit un phénomène de talonnage en butée de la caisse du véhicule au passage de la bosse.

Inversement, après franchissement d'une bosse, on constate que les roues ou galets associés aux éléments de suspension sont trop freinés, car la force hydraulique nécessaire pour faire traverser le clapet d'écrétage par le fluide est très élevée. Il en résulte que les galets (s'il s'agit d'un véhicule à chenilles) ou les roues ne reprennent pas contact avec le sol avant le châssis du véhicule, de sorte que l'ensemble tombe en même temps, ce qui produit à nouveau un choc très inconfortable pour les occupants du véhicule.

L'invention a donc pour but de réaliser un clapet d'écrétage qui ne se déclenche en compression aux vitesses moyennes que sous l'effet d'une force suffisante pour éviter le phénomène de talonnage, et qui inversement en détente après franchissement d'une bosse, s'ouvre sous l'action d'une force nettement inférieure à celle nécessaire à l'ouverture des clapets d'écrétage connus, et ce afin d'éviter le choc provoqué par la chute simultanée du châssis et des galets ou des roues.

Le clapet d'écrétage à double sens et à ouverture rapide visé par l'invention comprend un corps tubulaire présentant une ouverture centrale de passage d'un fluide hydraulique, un tiroir creux monté coulissant à l'intérieur d'une fourrure elle-même montée coulissante dans le corps et coaxiale au tiroir suivant l'axe général du clapet, un organe élastique prenant appui sur le corps et poussant le tiroir en butée contre une première extrémité annulaire de la fourrure par un siège annulaire dudit tiroir, une seconde extrémité annulaire de la fourrure étant percée d'ouvertures radiales obturées par le tiroir tant que ce dernier est maintenu en butée contre la fourrure par l'organe élastique, et des moyens pour faire coulisser le tiroir dans la fourrure dans le sens opposé à la force de rappel de l'organe élastique et pour permettre le passage du fluide hydraulique par ces ouvertures radiales lorsque la pression du côté de celles-ci dépasse une valeur déterminée. Un tel clapet est décrit dans le document EP-A-0244314 publié le 4.11.1987. Suivant l'invention, ce clapet a été perfectionné conformément à la revendication 1 pour atteindre le but cité plus haut.

Les essais effectués avec ce clapet ainsi agencé ont montré qu'en compression, aux vitesses moyennes, la force nécessaire à l'ouverture du clapet est largement supérieure à celle nécessaire à l'ouverture du clapet intérieur, de sorte que le phénomène de talonnage est supprimé. Inversement en détente, la force hydraulique nécessaire à l'ouverture du clapet dans le sens opposé au précédent est considérablement diminuée, de sorte que les roues ou galets reprennent contact avec le sol avant la caisse du véhicule et que le choc est également évité.

Suivant une caractéristique de l'invention, le chapeau est constitué d'un fond et d'une jupe annulaire dans laquelle sont ménagées lesdites lumières radiales et qui est maintenue en appui contre un épaulement ou saillie annulaire intérieur du corps, et le chapeau ainsi que le corps sont logés dans une enveloppe tubulaire dans laquelle sont formées des canalisations débouchant dans les lumières radiales du chapeau d'une part, et à l'extérieur de l'enveloppe du côté opposé au chapeau et au tiroir d'autre part.

D'autres particularités et avantages de l'invention apparaitront au cours de la description qui va suivre, faite en référence aux dessins annexés qui en illustrent un mode de réalisation à titre d'exemple non limitatif, ainsi que deux exemples d'application à des éléments de suspensions hydropneumatique :

- la Figure 1 est une vue mi-coupe longitudinale, mi-élévation d'un élément de suspension hydropneumatique destiné notamment à un véhicule lourd, et qui peut être équipé d'un amortisseur selon l'invention;
- la Figure 2 est une vue analogue à la Figure 1 d'un second élément de suspension hydropneumatique pouvant être équipé d'un amortisseur selon l'invention;
- la Figure 3 est une vue en coupe axiale d'une cartouche constituée par la combinaison d'un amortisseur et d'un clapet d'écrétage double sens à ouverture rapide selon l'invention, susceptible d'équiper des éléments de suspension tels que ceux des Figures 1 et 2, l'amortisseur et le clapet étant représentés au repos;

- la Figure 4 est une vue en coupe axiale et élévation partielle de l'amortisseur de la Figure 3;

- la Figure 5 est une vue en élévation en coupe suivant 5-5 de la Figure 4;

- la Figure 6 est une vue en coupe partielle à échelle agrandie d'un insert tubulaire et d'un déflecteur équipant l'amortisseur des Figures 3 à 5;

- les Figures 7 et 8 sont des vues analogues à la Figure 3, montrant l'amortisseur et le clapet respectivement en position de compression et de détente par le fluide hydraulique;

- la Figure 9 est une vue en élévation en bout de l'amortisseur suivant 9-9 de la Figure 10;

- la Figure 10 est une vue en coupe axiale d'une enveloppe tubulaire extérieure faisant partie de la cartouche des Figures 3 et 7, 8;

- la Figure 11 est une vue en section transversale suivant 11-11 de la Figure 10;

- la Figure 12 est une vue en élévation en bout suivant la flèche F de la Figure 10;

- et la Figure 13 est un graphique illustrant la variation, en fonction de la vitesse verticale de la roue du véhicule, de la force nécessaire, en compression et en détente, pour faire fonctionner l'amortisseur et le clapet d'écrétage des Figures 3 à 12.

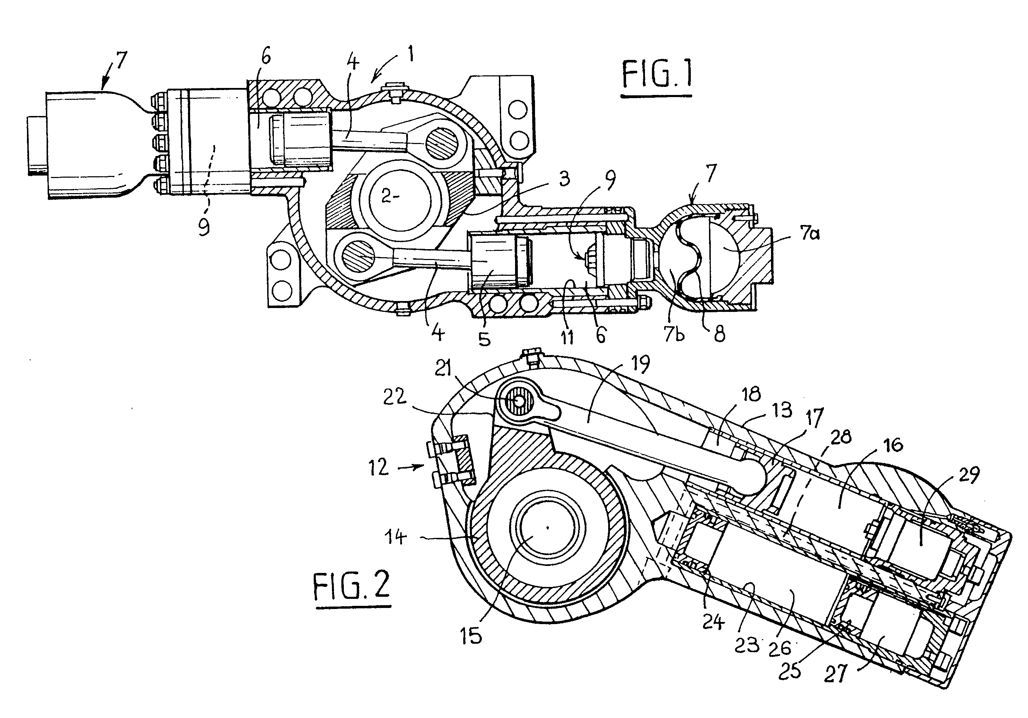

La Figure 1 montre un élément 1 de suspension hydropneumatique qui est décrit en détail dans le document EP-A-0149379 de la Demanderesse, et dont la description détaillée n'est donc pas ici nécessaire.

L'élément 1 comprend un bras 2 support de roue, seule une coupe transversale de ce bras étant ici visible et l'extrémité de ce bras opposée à la partie visible aux dessins étant articulée sur un galet mobile verticalement, non représenté. Sur un balancier 3 solidaire du bras 2, sont articulées les extrémités des tiges 4 de deux pistons 5 susceptibles de se déplacer simultanément dans des sens opposés durant les oscillations du bras 2, à l'intérieur de chambres hydrauliques 6. A chaque chambre 6 est associé un accumulateur de gaz 7 à membrane souple 8 de séparation entre le compartiment 7a du gaz et le compartiment hydraulique 7b communiquant avec la chambre hydraulique 6, et une cartouche amortisseur 9. Cette dernière est logée dans l'extrémité de la chambre hydraulique 6 opposée au piston 5, en regard du compartiment hydraulique 7b avec lequel elle communique, la chambre 6 étant délimitée par une pièce 11 raccordée de manière étanche à l'accumulateur 7.

Chaque cartouche 9 est constituée par l'assemblage d'un amortisseur et d'un clapet d'écrétage double sens à ouverture rapide, l'amortisseur pouvant avantageusement être conforme à celui visé par l'invention.

La Figure 2 représente un second élément de suspension 12 pour véhicules lourds, du type de celui décrit par le document EP-A-0197859 de la Demanderesse, et qui de ce fait ne sera donc pas décrit à nouveau en détail.

L'élément 12 comprend un bras 13 traversé par une fusée de roue (non représentée) du véhicule, et est articulé rotativement sur une partie fixe 14 solidaire du châssis (non représenté) du véhicule. La partie fixe 14 est coaxiale à un axe 15 relié au châssis, des moyens de roulement étant prévus entre le bras rotatif 13 et la partie fixe 14. Dans le bras 13 est ménagée une chambre hydraulique 16 qui contient un piston coulissant 17 séparant le chambre 16 d'un logement 18. Sur le piston 17 qui coulisse de façon étanche dans la chambre 16, est articulée une bielle 19 dont l'extrémité opposée au piston 17 est articulée sur un axe 21 fixe transversalement dans une patte 22 solidaire de la partie fixe 14.

Dans le bras 13 est par ailleurs ménagée une chambre pneumatique 23 d'axe parallèle à celui de la chambre hydraulique 16, et dans laquelle deux pistons librement coulissants 24, 25 délimitent deux chambres de gaz 26, 27. Du côté opposé à la chambre de gaz 26, le piston 24 reçoit la pression hydraulique provenant de la chambre 16 par une canalisation de liaison 28, dont une extrémité débouche dans la chambre 16 en regard d'une cartouche 29 constituée d'un amortisseur et d'un clapet d'écrétage double sens. La seconde extrémité de la canalisation 28 communique avec le circuit hydraulique (non représenté) du véhicule.

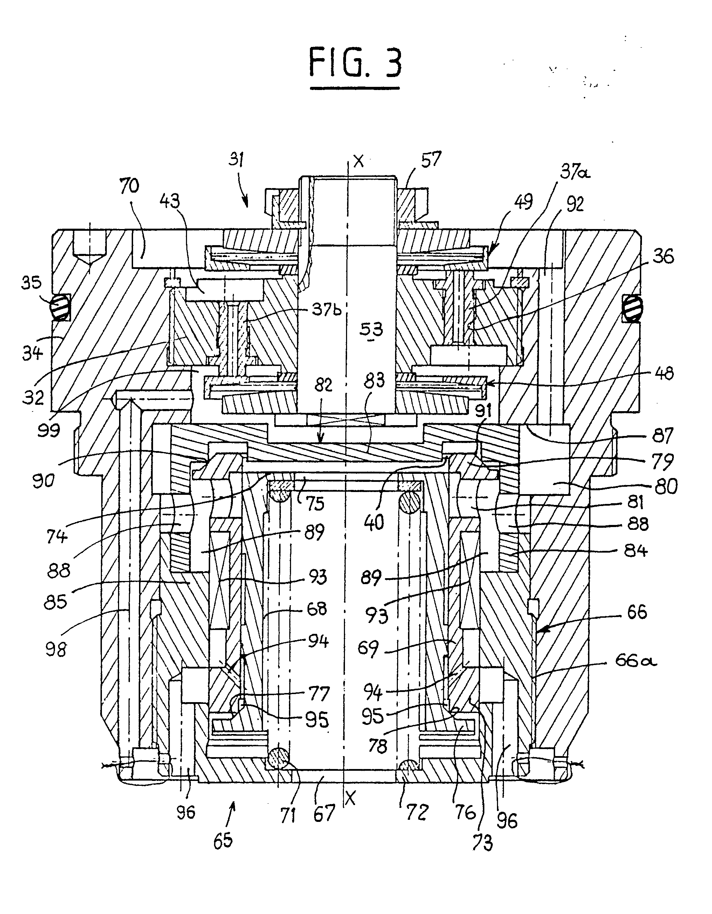

On décrira maintenant en référence plus particulièrement aux Figures 3 à 12 l'amortisseur et le clapet d'écrétage pouvant constituer les cartouches 9 et 29 des éléments de suspension des Figures 1 et 2 (ces exemples d'application de l'amortisseur et du clapet d'écrétage n'étant pas limitatifs).

A) Description de l'amortisseur (Figures 3 à 8)

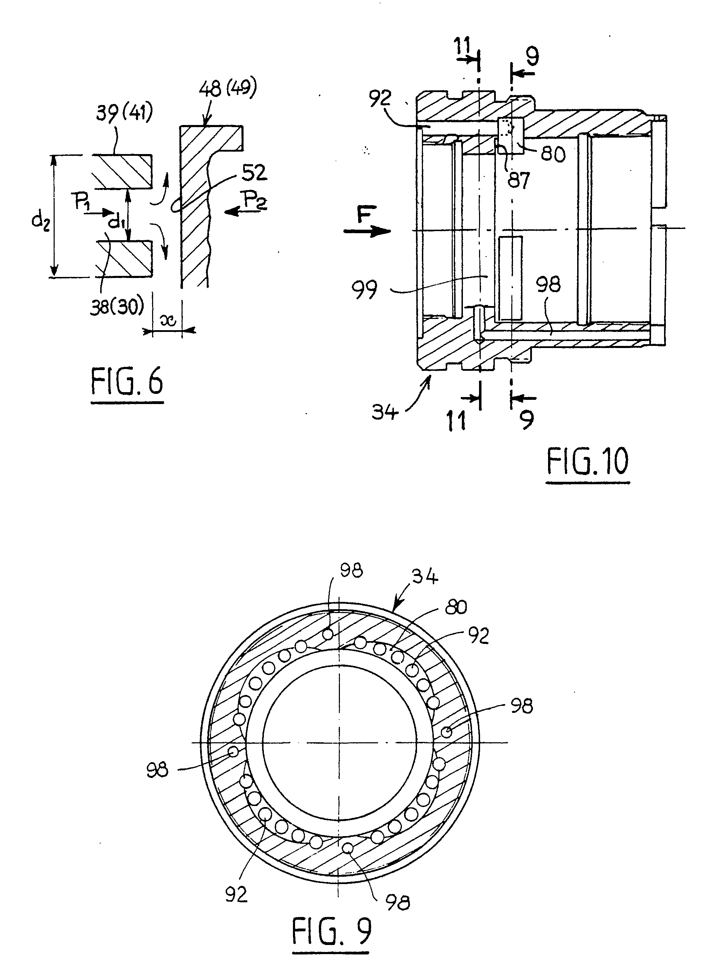

L'amortisseur 31 comprend un disque 32 muni d'un filetage extérieur 33 permettant de la visser dans une enveloppe tubulaire 34 munie d'un joint annulaire 35 d'étanchéité avec la paroi de la chambre hydraulique. Dans le disque 32, dont l'axe X-X est l'axe général de la cartouche (9 ou 29, Figure 1 ou 2) sont usinés des perçages 36 parallèles à l'axe X-X et régulièrement répartis autour de celui-ci, dans chacun desquels est fixé un insert tubulaire 37a, 37b dont la lumière intérieure 38, 30 débouche à ses extrémités opposées sur les deux faces du disque 32. On voit à la Figure 5, que dans cet exemple, les perçages 36 et les inserts correspondants sont au nombre de dix, ce nombre pouvant évidemment varier. Une partie des inserts, à savoir une moitié de ceux-ci, référencés 37a, est pourvue de collerettes terminales respectives 39 faisant saillie par rapport à la face du disque 32, tournée vers la chambre hydraulique, tandis que les autres inserts, référencés 37b, sont munis chacun d'une collerette terminale faisant saillie par rapport à la face opposée du disque 32.

Les extrémités des inserts 37a, 37b opposées aux collerettes 39, 41 débouchent dans des évidements respectifs 42, 43 formés dans la face correspondante du disque 32, ces évidements 42, 43 étant de préférence cylindriques et décentrés axialement par rapport aux axes des inserts correspondants 37a, 37b. Les évidements 42 et 43 sont distribués régulièrement autour de l'axe X-X suivant une répartition alternée, de même que par conséquent les inserts associés 37a, 37b. Dans l'exemple décrit, les évidements 43 sont formés sur la face du disque 32 tournée vers la chambre hydraulique de l'élément de suspension, et les collerettes 39 diamétralement opposées aux évidements 43, font saillie sur cette même face du disque 32, à l'opposé du clapet d'écrétage 65 associé à l'amortisseur 31. Cette disposition est inversée pour les évidements 42 et les inserts associés 37b. Les inserts sont fixés dans le disque 32 par tout moyen approprié, par exemple par un filetage 44 venant se visser dans un taraudage du perçage associé 36, et par un épaulement annulaire 45 venu de matière avec le reste de l'insert 37a, 37b et saillant radialement dans un logement correspondant du disque 32.

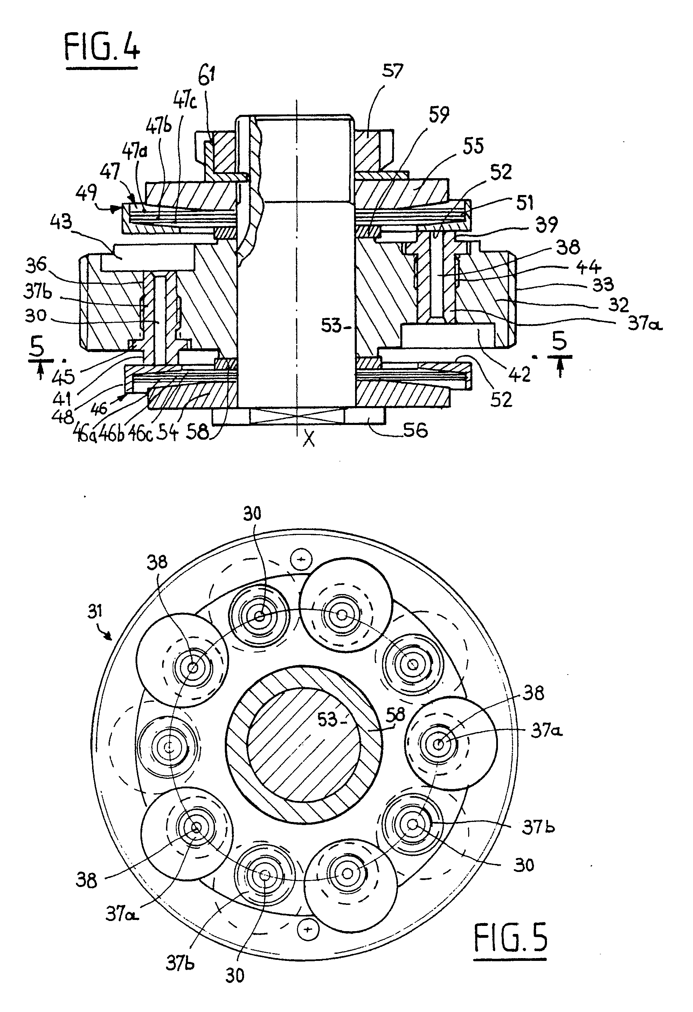

L'amortisseur 31 est équipé de moyens autorisant le passage du fluide hydraulique à travers le disque 32 dans un sens seulement pour les lumières 38 des inserts 37a, et dans le sens opposé seulement pour les lumières 30 des inserts 37b. Dans le mode de réalisation décrit , ces moyens comprennent, montés sur les deux faces opposées du disque 32, des empilements 46, 47 de rondelles métalliques élastiquement flexibles, disposés dans un déflecteur annulaire rigide 48, 49 localisé en regard des lumières 38, 30 des inserts 37a, 37b. Dans l'exemple illustré à la Figure 4, chaque empilement 46, 47 est constitué de trois rondelles 46a, 46b, 46c et 47a, 47b, 47c dont les bords extérieurs sont retenus radialement par une aile circulaire 51 du déflecteur correspondant 48, 49 coaxiale à l'axe X-X. Chaque aile 51 se prolonge par une couronne radiale 52 perpendiculaire à l'axe X-X et dont la surface vient en appui sur l'extrémité annulaire des inserts respectifs 37a et 37b.

L'amortisseur 31 est complété par une vis 53 traversant axialement le disque 32 ainsi que les empilements de rondelles 46, 47 et les deux déflecteurs 48, 49. Les empilements 46, 47 et les déflecteurs 48, 49 sont maintenus en place par des organes annulaires 54, 55 traversés par la vis 53, disposés en appui sur les rondelles 46a,... 47a,... dans la zone de celles-ci contiguë à la vis 53 et eux-mêmes fixés en place respectivement par une rondelle terminale 56 de la vis 53 et par un écrou 57. Deux rondelles 58, 59 sont interposées entre le disque 32 et les empilements 46, 47, et une troisième rondelle 61 est intercalée entre l'écrou 57 et l'organe annulaire 55.

Les rondelles 46a,...47a,..., les deux déflecteurs 48, 49 et les collerettes saillantes 39, 41 sont dimensionnés de manière que les couronnes 52 soient élastiquement maintenues par les rondelles correspondantes 46a,..., 47a,... sur les surfaces annulaires des collerettes respectives 39, 41, lorsque l'amortisseur 31 est au repos. Dans cette position (Figure 3-4), les parties de la surface des couronnes 52 qui ne sont pas en appui sur les collerettes 39, 41 sont donc distantes des évidements 43, 42 d'un intervalle égal à la profondeur de ceux-ci augmenté de l'écartement entre les couronnes 52 et les faces en regard du disque 32.

Le fonctionnement de cet amortisseur est le suivant :

Lorsque la pression hydraulique augmente brusquement sur une face du disque 32 jusqu'à une valeur suffisante prédéterminée, le fluide écarte des collerettes 30 ou 41, le déflecteur correspondant 49 ou 48, et le fluide s'écoule de l'autre côté du disque 32 par les lumières 38 ou 30. A cet écoulement du fluide s'oppose une dépression hydrodynamique précisément générée par cet écoulement entre le déflecteur 48 ou 49 et les surfaces annulaires des collerettes 41 ou 39, ainsi que la force de rappel élastique exercée par les empilements de rondelles 46 ou 47. L'écoulement du fluide se maintient donc tant que la pression hydraulique et la force amont ainsi créée sont supérieures à la dépression hydrodynamique et à la force de rappel élastique du déflecteur, qui tendent à rabattre celui-ci sur les collerettes 39 ou 41.

Or, la dépression hydrodynamique et la force correspondante exercée sur le déflecteur sont directement proportionnelles à la surface annulaire des collerettes 39, 41 en contact avec le déflecteur. Il en résulte que pour que le fluide puisse s'écouler effectivement à partir d'une certaine pression hydraulique, cette surface annulaire de contact ne doit pas dépasser une certaine valeur.

Inversement, si cette surface annulaire des inserts 37a, 37b en contact avec les déflecteurs 48, 49 est trop faible, la force d'appui de ceux-ci sur les collerettes 41, 30 risque de dépasser la limite de résistance élastique du matériau des inserts 37a, 37b, et par conséquent de provoquer un matage des collerettes 39, 41. On comprend donc que l'épaisseur de la paroi des inserts, c'est-à-dire la largeur de leur surface annulaire recevant les déflecteurs 48, 49, doit se situer entre des limites déterminées, dépendant des matériaux utilisés et de la pression hydraulique dans la chambre de l'élément de suspension.

En référence maintenant à la Figure 6, ces limites peuvent être déterminées à partir des données suivantes :

- $d1$ = diamètre de la lumière 38 ou 30 de la collerette saillante 39, 41 de l'insert 37a ou 37b;
- $d2$ = diamètre extérieur de la collerette 39 ou 41;
- $x$ = distance entre la surface de la couronne 52 du déflecteur 48 ou 49 et la surface annulaire de la collerette 39 ou 41 lorsque du fluide hydraulique à pression suffisante s'écoule de la lumière 38 (30) vers l'extérieur du déflecteur 48 (49);
- $p1$ = pression hydraulique dans la lumière;
- $p2$ = pression hydraulique dans le déflecteur;
- $S$ = surface du déflecteur égale à la section de la lumière 38 (30) et recevant la pression $p1$.

L'équilibre dynamique est réalisé lorsque la relation ci-dessous est satisfaite, dans laquelle $F_1$ est la force exercée sur la surface $S$ du déflecteur par la pression $p1$, $F2$ est la force élastique de rappel du déflecteur, et $F3$ est la force créée par la dépression hydrodynamique entre la collerette 39 et le déflecteur 48.

$$F_1 = F_2 + F_3 \left(\tfrac{d2}{d1}, x\right)$$
$$\text{soit } (p1 - p2)S = F_2 + F_3$$
$$\text{d'ou } (p1 - p2) \pi \left(\tfrac{d1}{2}\right)^2 = F_2 + \alpha . F_2$$
$$\text{et } x = f\left[(p1 - p2)d^2_1 ; \tfrac{d1}{d2}\right]$$

En effet, la dépression hydrodynamique est aussi fonction de la force élastique de rappel $F_2$ du déflecteur. Cependant, cette force de rappel hydrodynamique est d'abord fonction du rapport $d2/d1$, de sorte que si ce rapport est trop élevé, donc si la surface de contact est trop importante, le déflecteur ne s'écarte pas de l'insert, ou bien se rabat sur celui-ci immédiatement après s'en être écarté, et l'obture définitivement. Inversement, si le rapport $d2/d1$ est trop faible (étant à la limite égal à 1), la limite élastique de résistance du matériau de l'insert sera atteinte ou dépassée, et il se produira un matage du pourtour de la collerette 39 ou 41, qui rendra l'amortisseur impropre à fonctionner.

Ainsi, la relation ci-dessous doit être vérifiée.

$$A < \tfrac{d2}{d1} < B$$

où $A$ est un coefficient correspondant à la limite élastique du matériau de l'insert et $B$ est la valeur du rapport $d2/d1$ à partir de laquelle le déflecteur se referme et bloque l'amortisseur.

A titre d'exemple indicatif, en fonction des matériaux utilisés pour l'amortisseur et de la pression hydraulique régnant dans l'élément de suspension (qui peut atteindre 1000 bars environ dans certains véhicules lourds), on peut avoir $\alpha$ = 0,25. On peut donc déterminer les valeurs limites du rapport $d2/d1$.

Parmi les variantes d'exécution possibles de l'amortisseur 31, on citera notamment les suivantes : le nombre des rondelles élastiques 46a-47c peut varier, ces rondelles étant choisies en un matériau convenable, de même que les déflecteurs 48, 49 qui peuvent être réalisés de préférence en acier. Le nombre des inserts 37a, 37b et des perçages 36 peut également varier et ils peuvent être fixés dans le disque 32 par tout moyen approprié.

On notera que les surfaces des organes annulaires 54, 55 faisant face aux rondelles 46a-47c sont d'abord planes à partir de la vis 53, puis tronconiques, afin de réserver entre ces rondelles et les lesdites surfaces tronconiques un intervalle croissant jusqu'à la périphérie des organes 54, 55. Cet agencement autorise le débattement élastique nécessaire pour les rondelles et les déflecteurs 48, 49.

B) Description du clapet d'écrétage (Figures 3, 7 à 12)

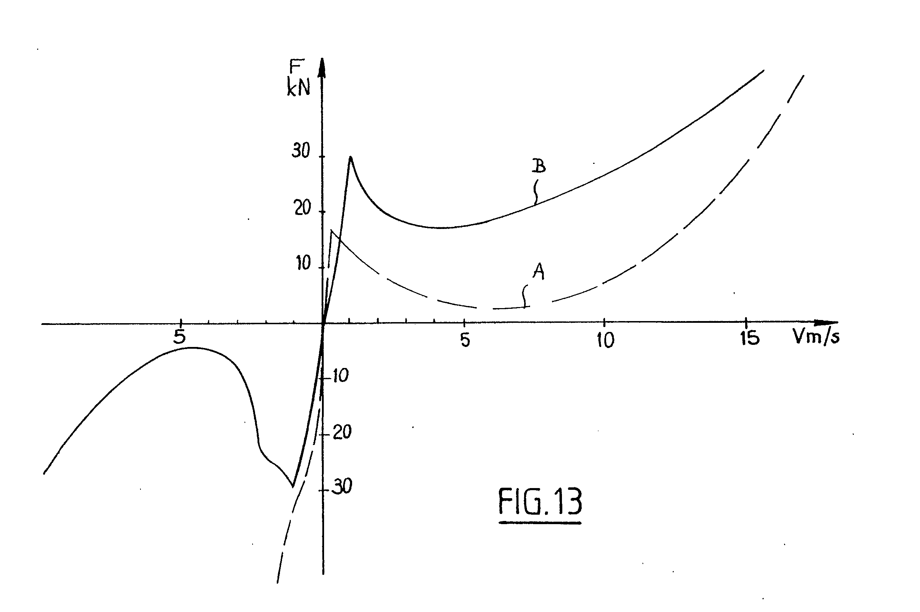

Avec les clapets connus d'écrétage double sens à ouverture rapide, on observe un double inconvénient qui peut être expliqué en référence à la Figure 13. Sur celle-ci, on a représenté en ordonnées la force (en kN) nécessaire à l'ouverture d'un clapet d'écrétage connu en fonction de la vitesse $V$ du véhicule (en m/s), c'est-à-dire en fonction du débit d'écrétage, lequel est proportionnel à la vitesse. La partie de la courbe A pour des vitesses positives (abscisses) correspond à la compression du fluide, tandis que la partie en abscisses négatives correspond à la détente. Les deux parties de la courbe A à pente très forte (pics) de part et d'autre de $V = o$ correspondent aux va-et-vient du fluide par le seul amortisseur (débit de laminage).

On voit qu'aux vitesses verticales moyennes de la roue, c'est-à-dire d'environ 5 à 10 m/s du véhicule, la force nécessaire à l'ouverture du clapet en compression est relativement faible. Il en résulte que lorsque le véhicule franchit une bosse à ces vitesses, il se produit un phénomène de talonnage en butée de la caisse du véhicule, donc une secousse désagréable pour les occupants de celui-ci. Au-dessus de ces vitesses, la force de déclenchement croît rapidement. D'autre part, en détente, pour des vitesses verticales négatives comprises entre 0 et - 2 m/s environ, on voit d'après cette partie de la courbe A, que la force nécessaire pour assurer effectivement le passage du fluide d'abord dans l'amortisseur, puis à travers le clapet, est très élevée. Ceci signifie qu'après passage d'une bosse à faible vitesse, les roues ou galets du véhicule ne retombent pas suffisamment vite pour reprendre contact avec le sol avant la caisse. L'ensemble caisse et roues tombe donc en même temps, ce qui produit un nouveau choc très inconfortable pour les occupants du véhicule.

Le clapet d'écrétage 65 illustré aux Figures 3 et 7 à 12 est réalisé de manière à pouvoir éliminer ces inconvénients des clapets antérieurs.

Le clapet 65 est logé dans l'enveloppe tubulaire 34 contenant l'amortisseur 31, (ce dernier pouvant être remplacé par tout autre amortisseur approprié), et comprend un corps tubulaire 66 vissé dans l'enveloppe 34 par un filetage 66a, présentant une ouverture centrale 67 du côté du fond de la chambre hydraulique opposé au piston, c'est-à-dire du côté de l'accumulateur (sur la Figure 1 : chambre 6, piston 5 et accumulateur 7), cette ouverture 67 étant destinée au passage du fluide hydraulique.

Le clapet 65 comporte par ailleurs un tiroir creux 68 monté coulissant suivant l'axe général X-X du clapet 65 et de l'amortisseur 31 à l'intérieur d'une fourrure 69 elle-même montée coulissante suivant X-X dans le corps 66 et coaxiale au tiroir 68. Un organe élastique constitué dans cet exemple par un ressort hélicoïdal 71 prend appui sur un épaulement annulaire 72 du corps 66 délimitant l'ouverture centrale 67 et pousse le tiroir 68 en butée contre une première extrémité annulaire 73 de la fourrure 69. A cet effet, l'extrémité du ressort 71 opposée à l'ouverture 67 s'appuie sur un second épaulement annulaire 74 du tiroir 68, formé à son extrémité opposée à l'ouverture 67 et délimitant une seconde ouverture centrale 75 du tiroir 68. La partie terminale 76 du tiroir 68 voisine de l'ouverture 67 et constituée par un collet radial, présente un siège annulaire tronconique 77 normalement maintenu en appui contre une arête terminale 78 de la fourrure 69 par le ressort 71.

La seconde extrémité annulaire 79 de la fourrure 69, opposée à la partie terminale 76, est percée d'ouvertures radiales 81 obturées par le tiroir 68 tant que ce dernier est maintenu en butée contre la fourrure 69 par le ressort 71.

Par ailleurs, le clapet 65 comprend un chapeau 82 de fermeture du corps 66 du côté de celui-ci opposé à son ouverture centrale 67, c'est-à-dire du côté de l'ouverture 75 du tiroir 68. Le chapeau 82, constitué d'un fond 83 perpendiculaire à l'axe X-X et d'une jupe annulaire 84 coaxiale à l'axe X-X, est fixé entre un épaulement interne cylindrique 85 du corps 66 et un autre épaulement annulaire 87 de l'enveloppe 34. Le pourtour du fond 83 est donc en butée contre l'épaulement 87, tandis que l'extrémité annulaire de la jupe 84 est en butée contre l'épaulement 85 (Figures 3, 7 et 8). Dans la jupe 84 sont ménagées des lumières radiales 88 en communication avec les ouvertures radiales 81 par des chambres correspondantes 89, délimitées entre la fourrure 69 et la jupe 84.

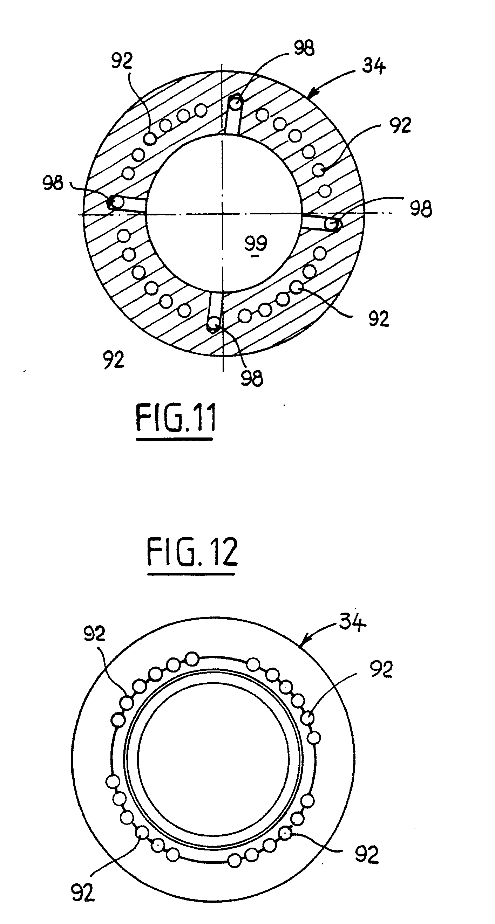

La partie terminale 79 de la fourrure 69 contiguë au chapeau 82 présente un siège tronconique 91 d'appui sur une arête circulaire 90 du chapeau 82, sur laquelle elle est sollicitée en appui par l'extrémité 76 du tiroir 68, lui-même sollicité par le ressort 71. La section annulaire du siège 91 est supérieure à la section annulaire du siège 77 d'appui du tiroir 68 contre la partie terminale 73 de la fourrure 69. Des canalisation longitudinales 92 formées dans l'enveloppe 34, au nombre de 24 dans cet exemple (Figure 12) et réparties autour de l'axe X-X, débouchent, d'une part dans des chambres 80 (Figure 9) communiquant avec les lumières 88, et d'autre part dans une cavité 70 de l'enveloppe 34 et dans la chambre hydraulique de l'élément de suspension, au niveau du déflecteur 49 de l'amortisseur 31, donc du côté de l'enveloppe 34 opposé au chapeau 82.

Des conduits longitudinaux 93 sont agencés dans la fourrure 69 et communiquent, d'une part avec les chambres 89, et d'autre part avec des perçages tranversaux 94 de la fourrure 69, contigus à sa partie terminale 73. Les perçages 94 communiquent eux-mêmes avec des dégagements longitudinaux 95 réservés entre l'extrémité adjacente 76 du tiroir 68 et la partie terminale 73 de la fourrure 69. Ces dégagements 95 sont fermés par le siège annulaire 77 d'appui du tiroir 68 sur l'arête 78 de la fourrure 69, tant que le tiroir 68 est appliqué en butée contre ladite fourrure 69.

Des canalisations longitudinales 96 ménagées dans le corps 66 débouchent à l'une de leurs extrémités du côté opposé au chapeau 82, tandis que leurs extrémités opposées sont obturées par l'extrémité correspondante 73 de la fourrure 69 lorsque cette dernière est en butée par son siège 91 contre le chapeau 82.

L'épaulement annulaire 85 du corps 66 délimite, d'une part les chambres 89 et d'autre part les canalisations longitudinales 96 ainsi que, par la paroi intérieure de son épaulement 85, les conduits longitudinaux 93 de la fourrure 69.

Des canaux longitudinaux 98, au nombre de quatre dans cet exemple, sont formés dans l'enveloppe 34 et leurs extrémités débouchent respectivement sur la face de l'enveloppe 34 opposée au chapeau 82, et dans un logement 99 à l'intérieur de l'enveloppe 34, contenant l'amortisseur 31 de laminage du fluide hydraulique.

Le fonctionnement du clapet d'écrétage 65 qui vient d'être décrit est le suivant.

1 - Au repos, le clapet 65 est dans la situation représentée à la Figure 3. Les pressions hydrauliques sont équilibrées de part et d'autre du clapet, le ressort 71 maintient le tiroir 68 en butée contre la fourrure 69 par son siège 77 appliqué contre l'arête 78, de sorte que les dégagements 95 sont fermés, la fourrure 69 est en butée par son siège 91 sur l'arête 90 du chapeau 82, et les ouvertures radiales 81 sont fermées par le tiroir 68. Aucun passage de fluide ne s'effectue donc à travers le clapet 65.

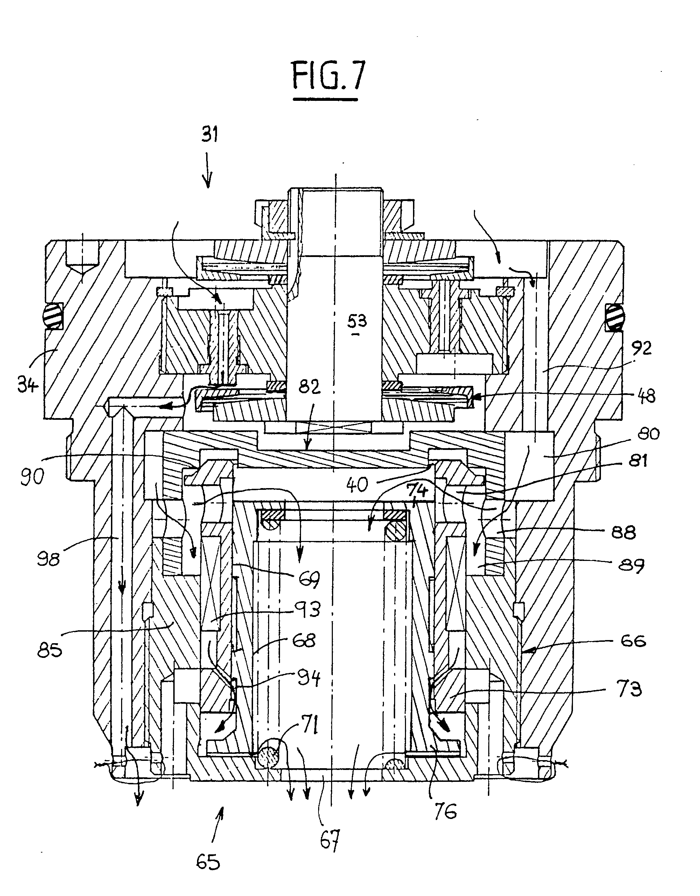

2 - Fonctionnement du clapet 65 en compression (Figure 7)

Si une brusque augmentation de la pression hydraulique au-delà d'une valeur déterminée se produit dans la chambre de l'élément de suspension, une partie du fluide écarte le déflecteur 48 des inserts 37b et pénètre donc dans le logement 99, d'où il s'écoule par les canaux 98 vers le côté opposé du clapet 65, donc vers l'accumulateur.

Une autre partie du fluide emprunte les conduits 92, la chambre 80, les lumières 88, les chambres 89, les conduits 93 et les perçages 94 ainsi que les dégagements 95. La pression exercée sur le tiroir 68 dans les dégagements 95 écarte alors le siège 77 de l'arête 78, et par conséquent le tiroir 68 de la fourrure 69, l'extrémité 76 du tiroir 68 venant en butée contre celle du corps 66. De ce fait, un faible débit de fluide s'écoule à partir des dégagements 95 entre les extrémités 73 et 76 puis entre l'extrémité 76 et le corps 66, et passe par l'ouverture 67. Simultanément du fluide hydraulique s'écoule par les lumières 81 ouvertes, entre l'extrémité 79 de la fourrure 69 et l'extrémité contiguë 74 du tiroir 68. Ce fluide traverse donc le tiroir 68 d'où il sort par l'ouverture 67.

Les différents trajets suivis par le fluide pendant la compression sont symbolisés par les flèches portées sur la Figure 7, sa plus grande partie s'écoulant par les conduits 92 et par le clapet 65.

La courbe B de la Figure 13 illustre un exemple de fonctionnement de l'ensemble clapet 65-amortisseur 31 : on voit qu'aux faibles vitesses, positives (compression), inférieures à 1 m/s environ, l'amortisseur 31 suffit à assurer le passage du fluide par les canaux 98, tandis qu'aux vitesse plus élevées du véhicule, le clapet 65 s'ouvre et son débit d'écrétage s'ajoute au débit de laminage de l'amortisseur 31. Le pic de laminage est nettement supérieur à celui de la courbe A, et la courbe B montre que la force nécessaire à l'ouverture du clapet 65 est également largement supérieure à celle des clapets antérieurs connus (courbe A), ce qui évite le phénomène néfaste de talonnage expliqué précédemment.

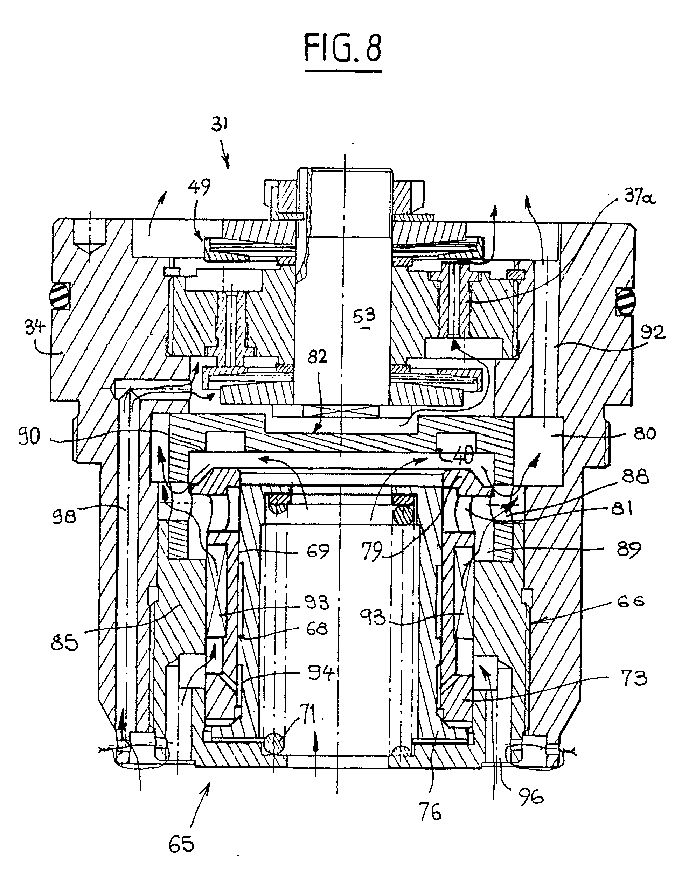

3 - Fonctionnement du clapet d'écrétage 65 en détente (Figure 8)

Dans ce cas, un brusque pic de pression hydraulique se produit à l'intérieur du tiroir 68, après passage du véhicule sur une bosse. La pression s'exerce sur le fond 83 du chapeau 82, puis sur le siège 91 de la fourrure 69, grâce à un intervalle annulaire 40 de passage réservé entre la partie terminale 79 de la fourrure 69 et le fond 83. La section annulaire du siège 91 étant supérieure à celle du siège 77 sur laquelle s'applique la même pression, entre les extrémités 73 et 76 de la fourrure 69 et du tiroir 68, la pression différentielle ainsi créée au niveau du siège 91 écarte celui-ci de l'arête 90, tandis que le siège 77 reste appliqué sur l'arête 78. La fourrure 69 coulisse et entraîne le tiroir 68 en butée contre l'extrémité annulaire du corps 66. De ce fait, le fluide hydraulique pénètre dans les chambres 89, les lumières 88 et les chambres 80, et de là s'écoule par les conduits 92 dans la chambre hydraulique.

En même temps, une autre partie du fluide s'écoule des conduits 96 dans les conduits 93 par l'intervalle ouvert entre le corps 66 et la fourrure 69, et de là par les lumières 88 dans les canalisations 92, tandis que le débit de laminage du fluide s'écoule par les canaux 98, le logement 99 et les inserts 37a en écartent de ceux-ci le déflecteur 49.

La plus grande partie du débit d'écrétage du clapet 65 passe latéralement par les conduits 96, 93, les chambres 89 et les lumières 88, et non entre le chapeau 82 et l'extrémité 79 de la fourrure 69.

Le clapet 65 absorbe le surplus par rapport au débit de laminage de l'amortisseur 31, qui emprunte les canaux 98.

La partie de la courbe B de la Figure 13 correspondant à des abscisses négatives montre que la force nécessaire à l'ouverture du clapet 65 en détente est d'abord légèrement inférieure à la force correspondante pour la courbe A, puis décroît rapidement au-delà d'une vitesse des 1 m/s, jusqu'à environ 5 m/s. ceci signifie qui'immédiatement après passage d'une bosse, le roue ou le galet associé à l'élément de suspension redescend beaucoup plus rapidement qu'avec un clapet antérieur (courbe A), ce qui évite le choc mentionné ci-dessus lorsque la caisse du véhicule reprend appui sur l'élément de suspension.

L'invention est susceptible de recevoir de nombreuses variantes d'exécution. Ainsi, il est évident que la configuration du chapeau de fermeture 82 peut varier, de même que le nombre des perçages 94, des canalisations 93, des lumières 88, des conduits 92 et 88.

Le clapet d'écrétage selon l'invention est utilisable dans l'élément de suspension décrit par les documents précités, ainsi que dans les amortisseurs à barre de torsion ou à ressort hélicoïdal et généralement dans tout amortisseur à système élastique.

Enfin, le clapet d'ecrétage et l'amortisseur décrit ci-dessus peuvent être utilisés dans tous véhicules automobiles, en particulier les véhicules lourds.

**Revendications**

1. Clapet d'écrétage (65) à double sens et à ouverture rapide pour élément de suspension hydropneumatique (1, 12) de véhicule, comprenant un corps tubulaire (66) présentant une ouverture centrale de passage (67) d'un fluide hydraulique, un tiroir creux (68) monté coulissant à l'intérieur d'une fourrure (69) elle-même montée coulissante dans le corps (66) et coaxiale au tiroir (68) suivant l'axe général (X-X) du clapet (65), un organe élastique (71) prenant appui sur le corps (66) et poussant le tiroir en butée contre une première extrémité annulaire (73) de la fourrure (69) par un siège annulaire (77) dudit tiroir (68), une seconde extrémité annulaire (79) de la fourrure (69) étant percée d'ouvertures radiales (81) obturées par le tiroir (68) tant que ce dernier est maintenu en butée contre la fourrure (69) par l'organe élastique (71), et des moyens pour faire coulisser le tiroir dans la fourrure dans le sens opposé à la force de rappel de l'organe élastique (71) et pour permettre le passage du fluide hydraulique par ces ouvertures radiales (81) lorsque la pression du côté de celles-ci dépasse une valeur déterminée, la construction du clapet étant telle que:

    a) ce clapet comprend un chapeau (82) de fermeture du corps tubulaire (66) du côté de celui-ci opposé à son ouverture centrale (67) et qui est coaxial audit corps (66), en ce que ce chapeau (82) est percé de lumières radiales (88) communiquant avec les ouvertures radiales (81) obturables par le tiroir (68) pour permettre le passage du fluide hydraulique, et la partie terminale (79) de la fourrure (69) contiguë au chapeau (82) est sollicitée en butée contre ledit chapeau par le tiroir (68) lui même sollicité par son organe élastique de rappel (71).

    b) la partie terminale (79) de la fourrure (69) contiguë au chapeau (82) présente un siège (91) d'appui sur une arête (90) de ce dernier dont la section annulaire est supérieure à la section annulaire du siège (77) d'appui du tiroir (68) sur l'extrémité opposée (73) de la fourrure (69)

    c) des conduits longitudinaux (93) sont agencés dans la fourrure (69) et communiquent, d'une part avec des chambres (89) dans lesquelles débouchent les lumières radiales (88) du chapeau et les ouvertures radiales (81) de la fourrure, et d'autre part avec des perçages transversaux (94) de la fourrure (69), qui eux-mêmes communiquent avec des dégagements longitudinaux (95) réservés entre l'extrémité adjacente (76) du tiroir (68) et ladite première extrémité (73) de la fourrure (69), ces dégagements (95) étant fermés par le siège (77) d'appui du tiroir (68) sur la fourrure (69) quand le tiroir est appliqué en butée contre ladite fourrure, et

    d) des canalisations longitudinales (96) ménagées dans le corps (66) débouchent à l'une de leurs extrémités du côté du corps opposé au chapeau (82), tandis que leurs extrémités opposées sont obturées par la première extrémité annulaire (73) de la fourrure (69) lorsque cette dernière est en butée contre le chapeau (82).

2. Clapet selon la revendication 1, dans lequel le chapeau (82) est constitué d'un fond (83) et d'une jupe annulaire (84) dans laquelle sont ménagées lesdites lumières radiales (88) et qui est maintenue en appui contre un épaulement annulaire (85) intérieur du corps (66), et le chapeau (82) ainsi que le corps (66) sont logés dans une enveloppe tubulaire (34) dans laquelle sont formées des canalisations (92) débouchant dans les lumières radiales (88) du chapeau (82) d'une part, et à l'extérieur de l'enveloppe (34) du côté opposé au chapeau (82) et au tiroir (63) d'autre part.

3. Clapet selon la revendication 2, dans lequel le chapeau (82) est fixé entre l'épaulement précité (85) du corps (66) et une surface d'appui délimitée par une surface annulaire (87) de l'enveloppe (34), et un intervalle annulaire (40) étant de plus réservé, indépendamment de la pression hydraulique, entre la partie terminale (79) de la fourrure (69) et le fond (83) du chapeau (83) pour permettre le passage du fluide jusqu'au siège (91) d'appui de la fourrure (69) sur l'arête (90) du chapeau (83).

4. Clapet selon la revendication 1, dans lequel l'épaulement annulaire (85) du corps (66) délimite, dans la direction longitudinale, les chambres (89) communiquant avec les ouvertures radiales (81) de la fourrure (69) et les lumières radiales (88) du chapeau (82), ainsi que les canalisations longitudinales (96) du corps (66), et, dans la direction radiale, lesdits conduits longitudinaux (93) de la fourrure (69).

5. Clapet selon l'une des revendications 2 à 4, dans lequel des canaux longitudinaux (98) sont formés dans l'enveloppe (34) et leurs extrémités opposées débouchent respectivement sur la face de l'enveloppe (34) opposée au chapeau (82) et dans un logement intérieur (99) de l'enveloppe (34) contenant un amortisseur (31) de laminage du fluide hydraulique.

6. Dispositif d'amortissement et d'écrétage à ouverture rapide double sens pour élément de suspension hydropneumatique (1, 12) de véhicule constitué par la combinaison d'un clapet (65) selon l'une des revendications 1 à 5 et d'un amortisseur (31).

## Claims

1. Bidirectional, fast-opening peak-limiting valve (65) for a hydrodynamic vehicle suspension element (1,12) having a tubular body (66) with a central passage orifice (67) for a hydraulic fluid, a hollow slide (68) mounted so as to slide within a sleeve (69), which is itself mounted so as to slide in the body (66) and coaxial to the slide (68) along the general axis (X-X) of the valve (65), an elastic member (71) bearing on the body (66) and making the slide abut against a first annular end (73) of the sleeve (69) by an annular seat (77) of said slide (68), a second annular end (79) of the sleeve (69) having radial orifices (81) closed by the slide (68) when the latter is kept in abutment against the sleeve (69) by the elastic member (71), as well as means for making the slide slide in the sleeve in the direction opposite to the restoring force of the elastic member (71) and so as to permit the passage of the hydraulic fluid through the radial orifices (81) when the pressure at the latter exceeds a predetermined value, the construction of the said valve being such that:
   a) said valve comprises a cover (82) for closing the tubular body (66) on the side thereof opposite to its central orifice (67) and which is coaxial to the said body and said cover (82) has radial ports (88) communicating with the radial orifices (81) closable by the slide (68) in order to permit the passage of the hydraulic fluid, and the terminal part (79) of the sleeve (69) contiguous to the cover (82) is made to abut against the said cover by the slide (68), which is itself subject to the action of its elastic restoring member (71);
   b) the terminal part (79) of the sleeve (69) contiguous with the cover (82) has a seat (91) bearing on an edge (90) of the latter, whose annular section is larger than the annular section of the seat (77) for the bearing of the slide (68) on the opposite end (73) of the sleeve (69);
   c) longitudinal conduits (93) are provided in the sleeve (69) and communicate on the one hand with chambers (89) into which issue the radial ports (88) of the cover and the radial orifices (81) of the sleeve and on the other hand having transverse bores (94) for the sleeve (69), which are themselves linked with longitudinal clearances (95) between the adjacent end (76) of the sleeve (68) and the said first end (73) of the sleeve (69), said clearances (95) being closed by the seat (77) for bearing on the slide (68) of the sleeve (69) when the slide abuts against the said sleeve and
   d) longitudinal conduits (96) formed in the body (66) and issuing at one of their ends on the side of the body opposite to the cover (82) whilst their opposite ends are closed by the first annular end (73) of the sleeve (69), when the latter abuts against the cover (82).

2. Valve according to claim 1, wherein the cover (82) is constituted by a bottom (83) and an annular skirt (84) in which are formed the said radial ports (88) and which is kept in engagement with en annular shoulder (85) within the body (66) and the cover (82), as well as the body (66) are located in a tubular envelope (34), in which are formed conduits (92) issuing into the radial ports (88) of the cover (82) on the one hand and externally of the envelope (34) on the side opposite to the cover (82) and the slide (68) on the other hand.

3. Valve according to claim 2, wherein the cover (82) is fixed between the aforementioned shoulder (85) of the body (66) and a bearing surface defined by an annular surface (87) of the envelope (34) and an annular gap (40) is also provided, independently of the hydraulic pressure, between the terminal part (79) of the sleeve (69) and the bottom (83) of the cover (82) in order to permit the passage of the fluid up to the seat (91) for the bearing of the sleeve (69) on the edge (90) of the cover (83).

4. Valve according to claim 1, wherein the annular shoulder (85) of the body (66) defines, in the longitudinal direction, the chambers (89) communicating with the radial orifices (81) of the sleeve (69) and the radial ports (88) of the cover (82), as well as the longitudinal conduits (96) of the body (66), and, in the radial direction, said longitudinal conduits (93) of the sleeve (69).

5. Valve according to one of the claims 1 to 4, wherein the longitudinal conduits (98) are formed in the envelope (34) and their opposite ends respectively issue onto the face of the envelope (34) opposite to the cover (82) and in an internal recess (99) of the envelope (34) containing a shock absorber (31) for throttling the hydraulic fluid.

6. Bidirectional fast-opening, peak-limiting and shock-absorbing device for a vehicle hydrodynamic suspension element (1,12) constituted by the combination, of a valve (65) according to one of the claims 1 to 5 and a shock absorber (31).

## Ansprüche

1. Doppelt wirkendes und schnell öffnendes Spitzenbegrenzungsventil (65) für das hydropneumatische Aufhängungselement (1,12) eines Fahrzeugs mit einem rohrfömrigen Körper (66), der eine zentrale Durchgangsöffnung (67) für eine Hydraulikflüssigkeit, ein hohles Fach (68), das gleitbeweglich im Inneren eines Mantels (69) angeordnet ist, der selbst gleitbeweglich in dem Körper (66) und koaxial zum Fach (68) gemäß einer allgemeinen Achse (X-X) des Ventil (65) angeordnet ist, ein elastisches Organ (71), das sich auf dem Körper (66) abstützt und das Fach in Anschlag gegen ein erstes ringförmiges Ende (73) des Mantels (69) durch einen ringförmigen Sitz (77) des Faches (68) drückt, wobei ein zweites ringförmiges Ende (79) des Mantels (69) mit radialen Öffnungen (81) versehen ist, die von dem Fach (68) verschlossen werden, wenn letzteres in Anschlag gegen den Mantel (69) durch das elastische Organ (71) gehalten wird und Einrichtungen aufweist, um das Fach in dem Mantel in die Gegenrichtung zur Rückstellkraft des elastischen Organs (71) gleiten zu lassen, und um den Hindurchtritt von Hydraulikflüssigkeit durch diese Radialöffnungen (81) zu erlauben, wann der Druck auf der Seite von diesen einen vorbestimmten Wert übersteigt, wobei der Aufbau des Ventils derart ist, daß:

a) dieses Ventil einen Deckel (82) zum Verschließen des rohrförmigen Körpers (66) auf dessen zur zentralen Öffnung (67) entgegengesetzten Seite aufweist und die koaxial zum Körper (66) verläuft, daß dieser Deckel (82) mit radialen Öffnungen (88) versehen ist, die mit den radialen Öffnungen in Verbindung stehen, die durch das Fach (86) verschließbar sind, um den Hindurchtritt von Hydraulikflüssigkeit zu erlauben und der Endbereich (79) des Mantels (69) in der Nähe dem Deckels (82) in Anschlag gegen den Deckel durch das Fach (68) gedrängt wird, welches selbst durch sein elastisches Rückstellorgan (71) beaufschlagt wird,

b) der Endbereich (79) des Mantels (69) anstoßend an den Deckel (62) einen Abstützsitz (91) auf eine Kante (90) des lezteren aufweist, dessen ringförmiger Abschnitt größer ist als der ringförmige Abschnitt des Abstützsitzes (77) des Fachs (68) auf dem entgegengesetzten Ende (73) des Mantels (69);

c) Längskanäle (93) in dem Mantel (69) ausgebildet sind und einerseits mit Kammern (89), in die die radialen Öffnungen (88) des Deckels und die radialen Öffnungen (81) des Mantels münden und andererseits mit Querdurchbrüchen (94) des Mantels (69) in Verbindung stehen, die selbst mit Längsausnehmungen (95) in Verbindung stehen, die zwischen den benachbarten Enden (76) des Faches (68) und dem ersten Ende (73) des Mantels (69) ausgebildet sind, wobei diese Ausnehmungen (95) durch den Abstützsitz (77) des Faches (68) auf dem Mantel (69) verschlossen werden, wenn das Fach in Anschlag gebracht wird gegen an Mantel, und

d) Längskanäle (96), die in dem Körper (66) ausgebildet sind, an einem ihrer Enden auf der dem Deckel (82) entgegengesetzten Seite des Körpers münden, während ihre entgegengesetzten Enden durch das erste ringförmige Ende (73) des Mantels (69) verschlossen werden, wenn dieses letztere in Anschlag ist gegen den Deckel (82).

2. Ventil nach Anspruch 1, bei dem der Deckel (82) aus einem Boden (83) und einem ringförmigen Mantel (84) gebildet wird, in dem die genannten radialen Öffnungen (88) ausgebildet sind, und die in Anschlag gehalten werden gegen eine ringförmige innere Schulter (85) des Körpers (66) und der Deckel (82) sowie der Körper (66) in einer rohrförmigen Umhüllung (34) angeordnet sind, in der die Kanäle (92) ausgebildet sind, die in die radialer Öffnungen (88) des Deckels (82) einerseits und außerhalb der Umhüllung (34) auf der dem Deckel (82) und dem Fach (68) gegenüberliegenden Seite andererseits münden.

3. Ventil nach Anspruch 2, bei dem der Deckel (82) zwischen der vorgenannten Schulter (85) des Körpers (66) und einer Abstützfläche befestigt ist, die durch eine ringförmige Fläche (80) der Umhüllung (34) begrenzt ist und ein ringförmiges Intervall (40) weiterhin vorgesehen ist, unabhängig von dem hydraulischen Druck zwischen dem Endbereich (79) des Mantels (69) und dem Boden (83) des Deckels (82), um den Hindurchtritt der Flüssigkeit bis zum Abstützsitz (91) des Mantels (69) auf der Kante (90) des Deckels (82) zu erlauben.

4. Ventil nach Anspruch 1, bei dem die rohrförmige Schulter (85) des Körpers (66) in der Längsrichtung die Kammern (89), die mit den radialen Öffnungen (81) des Mantels (69) und den radialen Öffnungen (88) des Deckels (82) in Verbindung stehen, sowie die Längskanäle (96) des Körpers (66) und in der radialen Richtung die genannten Längskanäle (92) des Mantels (69) begrenzt.

5. Ventil nach einem der Ansprüche 2 bis 4, bei dem die Längskanäle (98) in der Umhüllung (34) ausgebildet sind und ihre entgegengesetzten Enden in die Seite der Umhüllung (34), die dem Deckel (82) entgegengesetzt bzw. in eine innere Aufnahme (99) der Umhüllung (34), münden, die einen Drosselstoßdämpfer (31) der Hydraulikflüssigkeit enthält.

6. Schnellöffnende doppelt wirkende Stoßdämpfer- und Spitzenbegrenzungs-Vorrichtung für ein hydropneumatisches Aufhängungselement (1,12) eines Fahrzeugs, gebildet aus der Kombination eines Ventils (65) gemäß einem der Ansprüche 1 bis 5 und einem Stoßdämpfer (31).

FIG.1

FIG.2

# FIG. 3

FIG.4

FIG.5

FIG. 6

FIG.10

FIG. 9

15

# FIG.7

# FIG.8

FIG.11

FIG.12

FIG.13

EP 0 275 730 B1